**Europäisches Patentamt**

(19) **European Patent Office**

**Office européen des brevets**

(11) Publication number : **0 395 343 B1**

(12) **EUROPEAN PATENT SPECIFICATION**

(45) Date of publication of patent specification : **30.12.92 Bulletin 92/53**

(51) Int. Cl.⁵ : **B60R 19/04**

(21) Application number : **90304362.8**

(22) Date of filing : **24.04.90**

(54) **High-performance car bumper module.**

(30) Priority : **24.04.89 IT 2026889**

(43) Date of publication of application : **31.10.90 Bulletin 90/44**

(45) Publication of the grant of the patent : **30.12.92 Bulletin 92/53**

(84) Designated Contracting States : **AT BE CH DE DK ES FR GB GR LI NL SE**

(56) References cited :
**GB-A- 2 013 827**
**GB-A- 2 197 267**
**US-A- 2 519 429**
**US-A- 3 081 119**
**US-A- 4 328 986**
**US-A- 4 408 790**

(73) Proprietor : **CENTRO SVILUPPO SETTORI IMPIEGO S.r.l.**
**31, Foro Buonaparte**
**I-20121 Milan (IT)**

(72) Inventor : **Verzelli, Alberto**
**49 Via Vigliani**
**I-20148 Milan (IT)**
Inventor : **Rossi, Maurizio**
**3, Via Quirini**
**I-20052 Monza, Milan (IT)**

(74) Representative : **Whalley, Kevin et al**
**MARKS & CLERK 57/60 Lincoln's Inn Fields**
**London WC2A 3LS (GB)**

EP 0 395 343 B1

## Description

The present invention relates to a high-performance car bumper module.

The term "high-performance car bumper", as used in the following description and claims, means a car bumper wherein the increase in theoretical stiffness relatively to a normal bumper - with the other conditions, such as the car overhang, the fastening means, the resistant section (moment of inertia), the elastic modulus, and so forth, being the same - varies within the range of from 2.5 to 6 times as high, with a corresponding decrease in the overall stress conditions.

Then, suitable shock absorbers make it possible for energy to be transmitted by yielding at the maximum force value allowed by the chassis of the car.

Car bumpers achieve relatively poor performance in Europe, where an impact speed value of up to 4 km/h is provided for. Besides the economic constraints, the performance threshold is normally limited by the short displacements allowed for the bumper before it interferes with the frame, or with such functional parts, of the car, as the radiator. Within such limits, also, limited damage of the same bumper is normally required.

In Northern America, where longer displacements are allowed, e.g. thanks to the bumper protruding more outwards, performances corresponding to impact speeds of 8 km/h also by impact against a front barrier are reached; under such conditions, shock absorbers are normally used, e.g. of hydraulic type, in rigid-beam systems wherein the rigid beam is possibly protected by energy absorbing materials (such as flexible foamed materials). Also metal bumpers, still within the category of supporting-beam bumpers, require, in order to be able to operate within their range of reversibility (absence of yield or of permanent deformation), front energy absorbers, of the type comprising foamed materials with high front displacements, or absorbers installed on the brackets by means of which the bumper structure is anchored to the car, such as hydraulic shock absorbers.

Usually, within the operating range of the bumpers the maximum value of the force which can be transmitted to the chassis of the car is not reached, in particular in the case of front bumpers. It follows, with the allowed displacement being the same, that the actual impact speed is considerably decreased as compared to the maximum impact speed which can be theoretically achieved.

Aiming at reaching a meaningful increase in performance in terms of impact speed, with the other conditions being the same, some remarks can be formulated - in terms of energy - if the value of total force which can be transmitted to the structure of the car is fixed each time:

the optimum situation of energy absorption, for the purpose of reducing the displacements, consists in obtaining a rectangular shape of the graph of the force values vs. the displacement values (the variables), i.e. the energy absorption should take place already from the first impact moment, at the maximum allowed force (which is a preset constant): the availability is assumed of an infinite stiffness of the system, which yields under a constant controlled force (the system operates within its plastic range);

with the maximum force being still the same, the energy stored by a system in the elastic range is represented by a triangular chart, still showing the force values vs. the displacement values (the variables); in this case, with the surface area (i.e. the energy) being the same, the displacements are higher than in the previous case and with the limits of resistance typical for the materials used; elastic systems protected by shock absorbers, or displaying elasto-plastic phenomena, show lower values of maximum forces, than of the purely elastic case, with the relevant displacements being consequently higher.

US-A-4408790 describes a shock absorbing bumper for vehicles, including a bumper face member formed of a synthetic resin and a metal back plate fitted in the bumper face member. As shown in Figures 5 to 7 thereof, the bumper assembly is supported on a vehicle body by fitting hydraulic dampers in reinforced tubular members respectively secured to a frame of the vehicle.

The present inventors have devised a car bumper module which is capable of operating under high stiffness conditions, with a subsequent controlled forced displacement at the maximum allowed force, and wherein a desired stiffness value can be obtained with the structure of the bumper being subjected to smaller stress values.

The present invention provides a high-performance car bumper module comprising an aesthetic front piece, a reinforcing element inserted between said front piece and the frame of the car, and means with controlled (preferably reversible) forced displacement characteristics anchored to the frame and to said reinforcing element.

The reinforcing element is constituted by an arcuate structure whose arc, as less depressed as possible, is coupled with the internal surface of the front piece and has its ends, or portions close to its ends, connected with each other, by way of a hinge connection, by a tie-rod system endowed with high characteristics of axial strength and stiffness.

The front piece is preferably made from a thermoplastic material, and may be obtained by such techniques as injection moulding, co-injection moulding, RIM (reaction injection moulding), and so forth. Preferred thermoplastic materials are rubber-modified polypropylene, e.g. modified with ethylene-propylene or ethylene-propylene-diene rubbers, polyurethane, and so forth.

The front piece may have a shape and profile analogous to those of the presently used and traded bumpers, well-known to those skilled in the art.

The arcuate reinforcing structure can have a constant cross-section or a variable cross-section, with a simple outline or, more suitably, with a box section either of integral type or with an applied rear wall, and the tie-rod system can be constituted by one or more cylindrical rods, by cables, or by an either open or closed structural shape, therefore capable of also resisting to bending.

As regards the materials the arc structure may be made from either thermoplastic or thermosetting materials, preferably reinforced with long-fibre reinforcers, e.g., fiberglass. Examples of thermoplastic materials are polypropylene, polyurethane, polyamides, saturated polyester resins, and so forth; examples of thermosetting materials are the unsaturated polyester resins, the phenolic resins, the epoxy resins, the melamine resins, ureic, resorcinol resins, and so forth.

As regards the tie-rod system, high-strength, high stiffness materials should be preferably used. Among them long-fibre reinforced thermoplastic resins, pultruded rods with unidirectional long fibres, made from thermosetting resins, rods or thin sheets of spring steel, cables of steel or of synthetic fibres, and so on, can be mentioned.

The reinforcing element coupled with the front piece is intended to be fastened to the frame of the car through the means with characteristics of controlled forced displacement. These latter are preferably constituted by two hydraulic shock absorbers, rigidly fastened, on the one side, to the side members of the car, and fastened, on the other side, to the interior of the arcuate reinforcing structure through orientatable-hinge fastening means capable of allowing a transverse play or clearance, so as not to transmit considerable forces in the transverse direction relative to the longitudinal axis of the vehicle. Such transverse forces are borne by the tie-rod system.

The car bumper module can be also inserted in a general system supplied with further sacrificial absorbers or replacing the reversible absorbers with either total or partial sacrifice elements.

The arcuate structure, in particular in the vicinity of the corners of the bumper, makes it possible for suitable integrated absorbers, such as, e.g. flexible foams or foamed materials to be interposed between the aesthetic front piece and the arcuate structure, in order to withstand angled shocks.

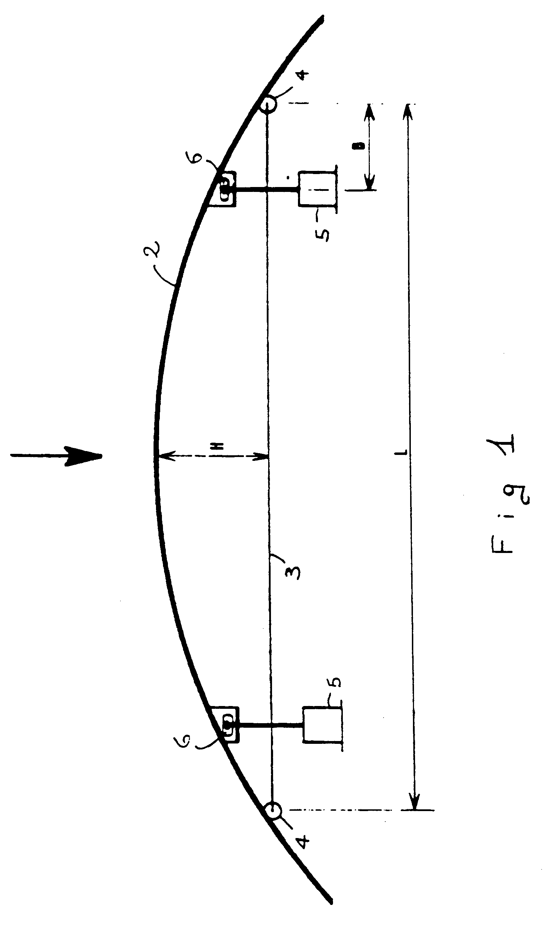

The closed system constituted by the arcuate structure and the tie-rod system connected with the controlled, reversible forced displacement means is geometrically set forth in Figure 1. While it is clear that the dimensions and the geometrical parameters which characterize the reinforcing element depend on the shape and dimensions of the car to which the bumper is applied, the present inventors have been able to find a relationship between the camber H of the arcuate structure and the length L of the tie-rod system, which is capable of enabling the bumper module to operate at the maximum value of desired stiffness.

In particular, the preferred ratio of H/L is equal to or higher than 0.08 and is generally comprised within the range of from 0.08 to 0.2, including the extremes; and, if B means the distance between the point of connection of the tie-rod with the arcuate structure and the point of connection of the arcuate structure with the yielding means, the ratio of 2B/L is preferably within the range of from 0 to 0.3, including the extremes.

The car bumper module can be installed on the car already pre-assembled (i.e. with the aesthetic front piece and the reinforcing element complete with the means with characteristics of controlled forced displacement being already assembled) or, as an alternative, the reinforcing element - which is fastened to the side beams of the car by means of the controlled forced displacement means - is first assembled on the car, and then the aesthetic front piece (fastened to the frame of the car by means of known anchoring systems such as, e.g., bolts and nuts) is installed.

The bumper module according to the present invention makes it possible to obtain stiffness values (with the other conditions being the same) which are many times as high as those which can be obtained with the traditional beam structure: by suitably dimensioning the structure and the tie-rod element, the maximum allowed force can be reached now, with the necessary margins in order to prevent phenomena of unstability of the second order.

With the maximum force being the same, the system, thanks to its geometry, makes possible a lower degree of stress to be applied to the arc structure than in the beam configuration.

When the maximum force is reached - with the corresponding displacement being the minimum - the system, thanks to the intervention of the absorbers under nearly constant force conditions, is capable of dissipating the expected energy by means of the translational motion of the closed system.

The structural and functional characteristics of the car bumper module according to the present invention can be better understood from the following disclosure in greater detail, with reference to the accompanying drawings which show a preferred, exemplifying, non-limitative form of practical embodiment of the present invention, and in which:

Figure 1 shows a geometrical configuration of the reinforcing element associated with the means with characteristics of controlled, reversible forced displacement; and

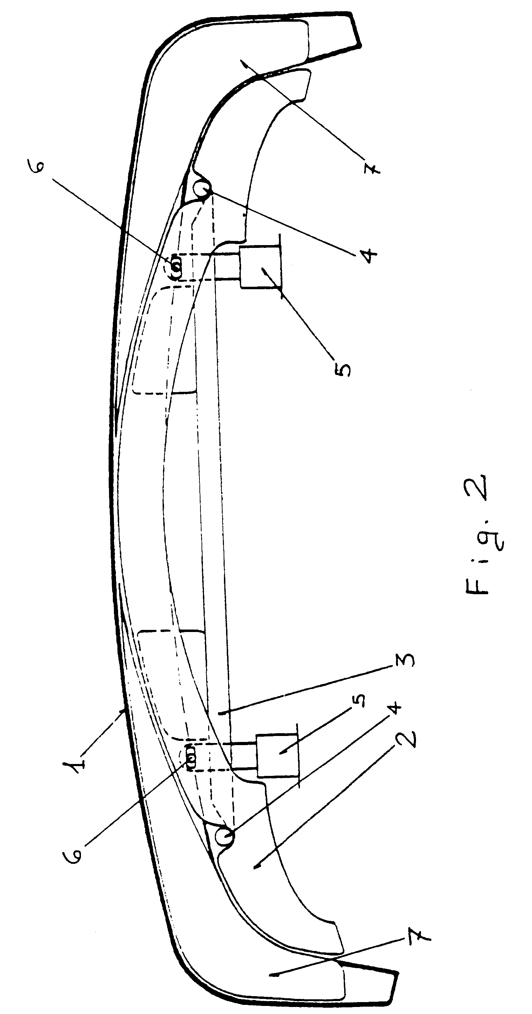

Figure 2 shows a schematic plan view of the whole assembled module.

Referring to the drawings, the bumper module illustrated comprises an aesthetic front piece 1, in a reinforcing element constituted by an arcuate structure 2 and by a tie-rod system 3 connected with the structure 2 by means of hinges 4, and means 5 with characteristics of controlled, reversible forced displacement fastened to the structure 2 by means of orientatable hinges 6 which allow transverse clearance or play.

In the vicinity of the corners of the bumper integrated absorbers 7 (e.g. flexible foamed materials) are provided, although they are not essential, in order that the bumper may withstand angled shocks.

Various changes, modifications, and variations can be made in the various parts which form the car bumper module shown for exemplifying purposes in the drawings.

## Claims

1. A high-performance car bumper module comprising an aesthetic front piece (1), a reinforcing element (2) behind the front piece (1), and means (5) with characteristics of controlled, reversible or irreversible, forced displacement anchored to the reinforcing element (2) and connectable to the frame of the car; characterized in that the reinforcing element comprises an arcuate structure (2) whose convex front external surface is coupled with the rear internal surface of the front piece (1), the ends of the arcuate structure (2), or portions close to its ends, being connected with each other, by way of respective hinge connections (4), by a tie-rod system (3) with axial strength and stiffness.

2. A module according to claim 1, characterized in that the front piece (1) is made from a thermoplastic material.

3. A module according to claim 1 or 2, characterized in that the arcuate structure (2) has a constant or variable cross-section, has a simple outline or has a box section either of integral type or with an applied rear wall, and the tie-rod system (3) is constituted by one or more cylindrical rods, by cables, or by an either open or closed structural shape.

4. A module according to claim 3, characterized in that the arcuate structure (2) and the tie-rod system (3) are both made from a thermoplastic material or from a thermosetting material reinforced with long-fibre reinforcing agents.

5. A module according to claim 3, characterized in that the tie-rod system (3) is constituted by steel rods or thin sheets, or by steel cables or synthetic-fibre cables.

6. A module according to any of claims 1 to 5, characterized in that the ratio (H/L) of the camber (H) of the arc of the reinforcing structure (2) to the length (L) of the tie-rod system (3) is at least 0.08 and is preferably in the range from 0.08 to 0.2.

7. A module according to any of claims 1 to 6, characterized in that the ratio 2B/L is within the range from zero to 0.3, where B is the lateral spacing between the point of connection of the tie-rod system (3) with the arcuate structure (2) and the point of connection of the arcuate structure (2) with the forced displacement means (5) and L is the length of the tie-rod system (3).

8. A module according to any preceding claim, characterized in that the means with characteristics of controlled and reversible forced displacement comprise two hydraulic shock absorbers (5) fastened inside the concavity of the arcuate reinforcing structure (2) through orientatable-hinge fastening means (6) capable of allowing transverse play.

## Patentansprüche

1. Hochleistungs-Stoßstangenmodul für Kraftfahrzeuge mit einem sichtbaren Vorderstück (1), mit einem Verstärkungselement (2) hinter dem Vorderstück (1) und mit Mitteln (5) mit kontrollierter, reversibler oder irreversibler, erzwungener Verschiebung, die am Verstärkungselement (2) verankert sind und die mit dem Rahmen des Fahrzeugs verbindbar sind,
**dadurch gekennzeichnet**,
daß das Verstärkungselement eine gebogene Struktur hat, deren konvexe Außen-Vorderseite mit der hinteren Innenseite des Vorderstücks (1) gekoppelt ist, wobei die Enden der gebogenen Struktur (2) oder Teile an deren Enden miteinander über jeweilige Gelenkverbindungen mit Hilfe eines Band-Stangensystems (3) mit axialer Stärke und Steifigkeit verbunden sind.

2. Modul nach Anspruch 1,
**dadurch gekennzeichnet**,
daß das Vorderstück (1) aus thermoplastischem Material besteht.

3. Modul nach Anspruch 1 oder 2,
**dadurch gekennzeichnet**,
daß die gebogene Struktur (2) einen konstanten oder variablen Querschnitt hat, einen einfachen Umriß oder einen kastenförmigen Querschnitt hat, entweder einstückig oder mit anliegender Rückwand, und daß das Band-Stangensystem (3) von einer oder mehreren zylindrischen Stangen gebildet wird, von Kabeln oder von einer offenen oder geschlossenen Strukturform.

4. Modul nach Anspruch 3,
**dadurch gekennzeichnet,**
daß die gebogene Struktur (2) und das Band-Stangensystem (3) beide aus thermoplastischem Material bestehen oder aus mit Langfasern verstärktem duroplatischem Material.

5. Modul nach Anspruch 3,
**dadurch gekennzeichnet,**
daß das Band-Stangensystem (3) aus Stahlstangen oder dünnen Blechen besteht, aus Stahlkabeln oder aus Kabeln aus Synthesefasern.

6. Modul nach einem der Ansprüche 1 bis 5,
**dadurch gekennzeichnet,**
daß das Verhältnis (H/L) der Biegung (H) des Bogens der verstärkenden Struktur (2) zu der Länge (L) des Band-Stangensystems (3) wenigstens gleich 0,08 ist und vorzugsweise im Bereich von 0,02 bis 0,2 liegt.

7. Modul nach einem der Ansprüche 1 bis 6,
**dadurch gekennzeichnet,**
daß das Verhältnis 2B/L im Bereich von Null bis 0, 3 liegt, mit B = seitlicher Abstand zwischen dem Verbindungspunkt des Band-Stangensystems (3) mit der gebogenen Struktur (2) und dem Verbindungspunkt der gebogenen Struktur (2) mit den Mitteln (5) für die erzwungene Verschiebung und mit L = Länge des Band-Stangensystems.

8. Modul nach einem der Ansprüche 1 bis 7,
**dadurch gekennzeichnet,**
daß die Mittel mit kontrollierter und reversibler, erzwungener Verschiebung zwei hydraulische Stoßabsorber (5) aufweisen, die innerhalb der Höhlung der gebogenen Verstärkungsstruktur (2) mit Hilfe von gelenkig ausrichtbaren Befestigungsmitteln (6) befestigt sind, die ein Spiel in Querrichtung erlauben.

**Revendications**

1. Un module de pare-chocs haute performance pour véhicule, comprenant une pièce frontale esthétique (1), un élément de renforcement (2) derrière la pièce frontale (1), et des moyens (5) présentant des caractéristiques de déplacement forcé contrôlées, réversibles ou irréversibles, ancrés dans l'élément de renforcement (2) et pouvant être raccordés au châssis du véhicule; caractérisé en ce que l'élément de renforcement comprend une structure incurvée (2) dont la surface externe frontale convexe est couplée à la surface interne arrière de la pièce frontale (1), les extrémités de la structure incurvée (2) ou des parties proches de ces extrémités, étant raccordées l'une à l'autre, au moyen de raccordements à charnières (4), par un système de tirant (3) présentant des propriétés de résistance mécanique et de rigidité axiale.

2. Un module selon la revendication 1, caractérisé en ce que la pièce frontale (1) est en un matériau thermoplastique.

3. Un module selon la revendication 1 ou 2, caractérisé en ce que la structure incurvée (2) possède une section transversale constante ou variable, a un contour simple ou possède une section en caisson, du type intégral ou avec une paroi arrière rapportée, et le système de tirant (3) est constitué d'une ou plusieurs barres cylindriques, de câbles, ou par une forme structurale ouverte ou fermée.

4. Un module selon la revendication 3, caractérisé en ce que la structure incurvée (2) et le système de tirant (3) sont tous les deux réalisés en un matériau thermoplastique ou en un matériau thermodurcissable renforcé par des agents de renforcement à fibres longues.

5. Un module selon la revendication 3, caractérisé en ce que le système de tirant (3) est constitué de barres d'acier ou de feuilles minces, ou de câbles métalliques ou de câbles en fibres synthétiques.

6. Un module selon l'une quelconque des revendications 1 à 5, caractérisé en ce que le rapport (H/L) de la flèche (H) de l'arc de la structure de renforcement (2) à la longueur (L) du système de tirant (3) est d'au-moins 0,08 et est de préférence compris entre 0,08 et 0,2.

7. Un module selon l'une quelconque des revendications 1 à 6, caractérisé en ce que le rapport 2B/L est compris entre 0 et 0,3, B étant la distance latérale entre le point de raccordement du système de tirant (3) à la structure incurvée (2) et le point de raccordement de la structure incurvée (2) à l'organe de déplacement forcé (5) et L étant la longueur du système de tirant (3).

8. Un module selon l'une quelconque des revendications précédentes, caractérisé en ce que le moyen présentant des caractéristiques de déplacement forcé contrôlées et réversible comprend deux amortisseurs de chocs hydrauliques (5) fixés à l'intérieur de la concavité de la structure de renforcement incurvée (2), par l'intermédiaire de moyens de fixation à charnières orientables (6) pouvant autoriser un jeu transversal.

Fig 1

EP 0 395 343 B1

Fig. 2

EP 0 395 343 B1